Europäisches Patentamt

**European Patent Office**

Office européen des brevets

(11) Numéro de publication: **0 277 436 B1**

## (12) FASCICULE DE BREVET EUROPEEN

(45) Date de publication de fascicule du brevet:
03.04.91

(21) Numéro de dépôt: 87401913.6

(22) Date de dépôt: 20.08.87

(51) Int. Cl.⁵: **A01K 39/02**

(54) **Rampe d'abreuvement pour volatiles.**

(30) Priorité: 03.02.87 FR 8701724

(43) Date de publication de la demande:
**10.08.88 Bulletin 88/32**

(45) Mention de la délivrance du brevet:
**03.04.91 Bulletin 91/14**

(84) Etats contractants désignés:
**AT BE CH DE ES GB GR IT LI LU NL SE**

(56) Documents cités:
**GB-A- 1 566 746**
**US-A- 3 405 686**
**US-A- 3 940 106**

(73) Titulaire: **S.A.R.L. dite LUBING INTERNATIO-
NAL**
**Rue du Fief**
**F-62840 Sailly sur la Lys(FR)**

(72) Inventeur: **Thur, Werner**
**56, rue du Fief**
**F-62840 Sailly sur la Lys(FR)**

(74) Mandataire: **Lepage, Jean-Pierre**
**Cabinet Lemoine & Associés 12, Boulevard
de la Liberté**
**F-59800 Lille(FR)**

## Description

L'invention est relative à une rampe d'abreuvement pour volatiles. Elle trouvera notamment son application dans l'élevage industriel au sol de volailles.

En matière d'abreuvoirs pour oiseaux, lorsqu'on s'adresse à une population de faible densité, on peut parfaitement envisager l'utilisation de distributeurs individuels fonctionnant à niveau constant. Ce type de distributeur présente généralement un réservoir autonome dépressurisé qui permet d'alimenter un point d'eau à niveau constant. Le fonctionnement à niveau constant constitue une caractéristique fondamentale de tout type d'abreuvoir étant donné que l'oiseau, généralement de petite taille, ne peut accepter une dénivellation importante entre le niveau d'eau et le rebord de l'abreuvoir. Il faut par conséquent fonctionner avec un faible écart dimensionnel à cet endroit.

Par ailleurs, en ce qui concerne l'élevage au sol, on ne peut disposer d'un abreuvoir très profond et donc la capacité d'eau stockée par l'abreuvoir est des plus limitées d'où le recours à un réservoir annexe.

Avec l'élevage industriel de volailles, ce type d'abreuvoir s'est montré tout à fait insuffisant pour répondre aux besoins. En effet, avec une densité de population très élevée, il est nécessaire de prendre des mesures pour éviter des déplacements massifs de la population, en particulier il y a lieu de répartir les divers points d'eau pour que chaque animal puisse en trouver un à proximité.

C'est ainsi qu'ont été créées les premières rampes d'abreuvement qui se présentent sous la forme de gouttières longitudinales réparties régulièrement dans la zone d'élevage.

Le remplissage des gouttières est réalisé à partir d'un réservoir indépendant qui réajuste le niveau d'eau dans la gouttière au fur et à mesure de la consommation.

S'il y a effectivement une bonne répartition des points d'eau au sein de l'élevage, ce type d'installation présente néanmoins de nombreux inconvénients.

Tout d'abord, la présence d'une gouttière longitudinale dans la salle d'élevage provoque une séparation qui gêne le libre déplacement des volatiles. Les oiseaux se voient dans l'obligation de voler pour fuir les concentrations massives et il y a création d'un désordre général.

En raison de la surface supérieure libre de la gouttière, l'eau présente se pollue très rapidement et des nettoyages fréquents sont nécessaires pour éviter les contagions. Les rebords de gouttières font office de perchoirs, ce qui accroît la vitesse à laquelle l'abreuvoir se pollue.

Les gouttières fixées au sol gênent le nettoyage de la pièce. Par ailleurs, il faut également regretter qu'il n'y ait pas de régalge en hauteur des gouttières ou alors, s'il existe, il est laborieux à mettre en oeuvre. En effet, la croissance des volatiles depuis le stade de poussin jusqu'à celui de poulet fait qu'il est souhaitable d'ajuster au cour de l'évolution la hauteur de l'abreuvoir. Or, dans la majorité des installations existantes, ce réglage est absent.

On connaît du document américain US-A-3.940.106 une rampe d'abreuvement pour volatiles, destinée notamment à l'élevage industriel au sol de volailles, qui assure une distribution d'eau à partir d'un réservoir de stockage ou d'une alimentation directe.

Cette rampe d'abreuvement comprend une conduite d'alimentation portant des points d'eau, ceux-ci étant notamment constitués par des godets dans lesquels le volatile vient boire l'eau.

Cette rampe comporte en outre des moyens anti-perchage des volatiles constitués par un fil tendu au-dessus de la canalisation, isolé de celle-ci et électrifié.

Une telle rampe présente au niveau de la pollution les mêmes problèmes que les rampes dites à gouttière, du fait de l'eau stagnante dans les godets.

Par ailleurs, ce document propose une solution pour éviter le perchage intempestif des volatiles sur la rampe, nécessitant l'électrification d'un fil, ce qui oblige une mise en oeuvre importante de moyens et qui est, sur le plan de la sécurité, dangereuse étant donné la présence d'eau et d'électricité.

Cela étant, on connaît également du document GB-A-1.566.740 un dispositif d'alimentation en eau pour volatiles, constitué par des becs d'écoulement automatiques répartis sur une conduite d'alimentation, et sous lesquels est prévu un godet récupérateur de l'eau délivrée par les becs, qui ne serait pas avalée par l'oiseau.

Ce brevet permet d'éviter la pollution de l'eau stagnante dans les godets puisque la quantité d'eau est délivrée uniquement à la demande des volatiles. En revanche, ce document n'apporte aucune solution pour éviter le perchage intempestif des volatiles sur la conduite afin d'éviter la pollution des godets.

Le but principal de la présente invention est de présenter une rampe d'abreuvement pour volatiles qui est à la fois très hygiénique et qui assure une bonne répartition des points d'eau tout en accordant aux animaux une libre circulation dans la zone d'élevage.

Contrairement à certaines installations existantes, n'est plus utilisé d'eau stagnante pour abreuver les volatiles mais au contraire il y a une alimentation de type dynamique c'est-à-dire avec délivrance simultanée de l'eau consommée. Les besoins sont donc couverts au fur et à mesure et aucune pollution de l'eau n'est à redouter.

L'accessibilité de la rampe d'abreuvement est omnidirectionnelle, elle ne crée aucune séparation dans la zone d'élevage et donc les oiseaux peuvent se déplacer librement et aborder un point d'eau en toute direction.

La rampe d'abreuvement de la présente invention présente également un aspect pratique en ce sens qu'elle peut être dégagée du sol pour faciliter le nottoyage de ce dernier. Des précautions ont été prises pour éviter que la rampe d'abreuvement de la présente invention puisse servir de perchoir aux volatiles.

Un autre avantage de la présente invention consiste à équiper la rampe d'abreuvement de la présente invention de moyens anti-perchage réalisés de façon simple et non dangereuse et qui évite une pollution rapide de la rampe pour limiter le nettoyage de l'installation.

D'autres buts et avantages de la présente invention apparaîtront au cours de la description qui va suivre qui n'est cependant donnée qu'à titre indicatif et qui n'a pas pour but de la limiter.

La rampe d'abreuvement pour volatiles destinée notamment à l'élevage industriel au sol de volailles, qui assure une distribution d'eau à partir d'un réservoir de stockage ou d'une alimentation directe, comprenant :

- une conduite d'alimentation portant des points d'eau espacés pour être accessibles sur toute leur périphérie,
- des godets disposés à chaque point d'eau,
- des moyens anti-perchage des volatiles,

est caractérisée par le fait que :

- lesdits moyens anti-perchage se présentent sous la forme d'un profilé formant une arête effilée à sa partie supérieure,
- ledit profilé est fixé sur ladite conduite d'alimentation au moyen de crochets présentant une ouverture autorisant l'engagement de ladite conduite dans chaque crochet,
- et lesdits crochets sont disposés sur ladite conduite de telle sorte que leur ouverture soit orientée alternativement afin d'immobiliser ledit profilé anti-perchage sur ladite conduite.

L'invention sera mieux comprise à la lecture de la description suivante accompagnée de dessins en annexe, parmi lesquels :

la figure 1 schématise la rampe d'abreuvement pour volatiles selon un mode préférentiel de réalisation de l'invention,

la figure 2 illustre en vue de détail un point d'eau équipé d'un godet récupérateur,

la figure 3 représente une vue en coupe du dispositif antiperchoir de la présente invention,

la figure 4 représente la mise en oeuvre des moyens de fixation d'un godet récupérateur sur la conduite d'alimentation,

la figure 5 représente en vue de coupe un godet automatique muni d'un dispositif d'actionnement des becs d'écoulement d'eau.

La présente invention vise un rampe d'abreuvement pour volatiles. Elle trouvera notamment son application dans l'élevage industriel au sol de volailles.

Essentiellement pour des raisons économiques, la production de volailles est actuellement principalement réalisée selon les techniques de l'élevage industriel au sol. De nombreuses difficultés sont apparues en raison de la densité de population très élevée rencontrée dans ce type d'élevage.

Des précautions particulières doivent être prises en matière d'hygiène étant donné que toute contamination se propage à très grande vitesse et a des répercutions catastrophiques sur la population qui peut être décimée dans un bref intervalle de temps.

Il faut cependant que les installations d'alimentation en eau présentent une certaine commodité d'utilisation en particulier il faut minimiser le nombre d'intervention tout en satisfaisant un large besoin.

Actuellement, la distribution d'eau dans les élevages est assurée au moyen de rampes d'abreuvement qui se présentent sous la forme de gouttières longitudinales dont le niveau d'eau est entretenu par un apport extérieur. Ce type d'installation est commode car il ne nécessite pas une surveillance constante du fait du remplissage automatique. Par contre, il présente deux inconvénients majeurs.

D'une part, la présence de la gouttière provoque une séparation de la poplulation dans la salle, d'où des phénomènes de migration avec création d'un déséquilibre de la densité de population.

Ensuite, ce type de rampe d'abreuvement n'est pas hygiénique. En effet, l'eau se pollue très rapidement et cela se traduit par l'obligation de nettoyages fréquents. L'eau stagnante est propice à la prolifération des microbes d'où un risque de contagion élevé.

C'est précisément pour lutter contre ces inconvénients qu'à été développée la présente invention.

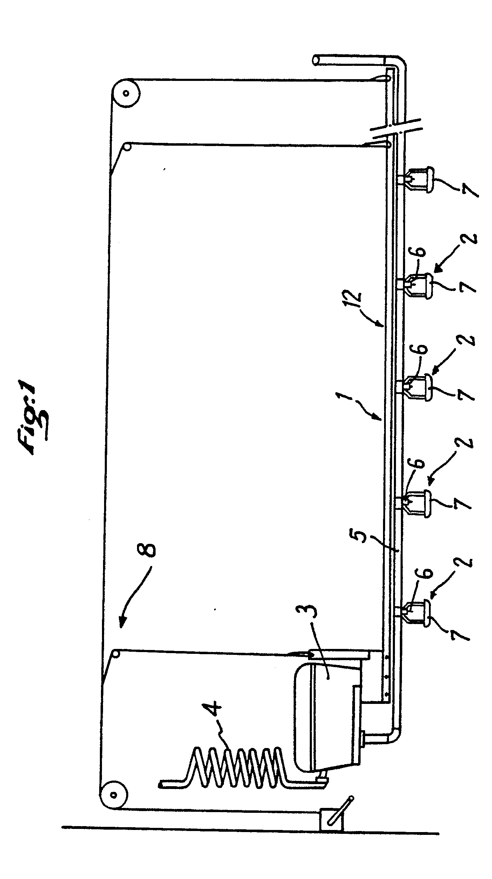

La figure 1 schématise un mode préférentiel de réalisation de la rampe d'abreuvement (1) pour volatiles. Elle comporte différents points d'eau (2) répartis le long de la rampe, ces points d'eau étant disposés en hauteur par rapport aux volatiles c'est-à-dire qu'ils peuvent librement circuler autour des points d'eau et y accéder par toutes les directions. Il s'agit d'un avantage énorme par rapport aux installations existantes puisque, selon cette technique, la rampe d'abreuvement (1) ne crée plus de séparation artificielle dans la zone d'élevage. Par ailleurs, l'accès des points d'eau est facile puisqu'il peut se faire dans les quatre directions, contrairement aux gouttières qui ne présentent que deux bords d'accès.

La distribution d'eau est centralisée à partir d'un réservoir de stockage (3) qui joue un double rôle. Tout d'abord, ce réservoir (3) constitue une réserve d'eau dans laquelle il est possible d'ajouter des additifs. Ensuite, le réservoir permet d'abaisser considérablement la pression d'eau en aval. En effet, la rampe d'abreuvement doit de préférence être alimentée à partir d'eau sous faible pression pour éviter les aspersions.

Le réservoir (3) peut lui même être alimenté directement à partir du réseau d'eau par une canalisation (4) auquel cas il comporte un dispositif intégré qui limite le remplissage.

La rampe d'abreuvement comprend une conduite (5) d'alimentation sur laquelle sont branchés des becs (6) d'écoulement automatique qui forment des points d'eau (2) espacés. Ces becs d'écoulement automatique (6) sont tels que, lorsque l'animal les actionne en appuyant sur le téton saillant, il en coule un filet d'eau, goutte à goutte.

Le téton des becs (6) d'écoulement automatique est accessible depuis toutes les directions d'où une grande facilité d'accès aux points d'eau espacés (2).

La conduite d'alimentation (5) est tubulaire, son profil peut être quelconque, néanmoins une géométrie carrée est recommandée pour permettre que les organes suspendus à ladite conduite (5) soient immobilisés en rotation. La conduite (5) est percée pour permettre la mise en place des becs d'écoulement (6). De préférence, les becs (6) sont régulièrement espacés.

La rampe d'abreuvement (1) comporte également des godets (7) suspendus à la conduite (5) d'alimentation et disposés sous chaque point d'eau (2). Ces godets permettent de récupérer l'eau délivrée par les becs (6) et qui ne serait pas avalée par l'oiseau. Ainsi, les éclaboussures sont évitées. Il n'y a également aucune perte d'eau puisque l'eau présente dans les godets est généralement bue en priorité par les animaux.

Selon l'invention, la conduite (5) est suspendue à un treuil (8) qui permet l'ajustement en hauteur de la rampe d'abreuvement (1). Les avantages de cette technique sont doubles car, non seulement il est possible de suivre ainsi la croissance des volatiles mais également le nettoyage de la zone d'élevage est facilité en relevant suffisamment la rampe d'abreuvement (1) pour dégager le sol.

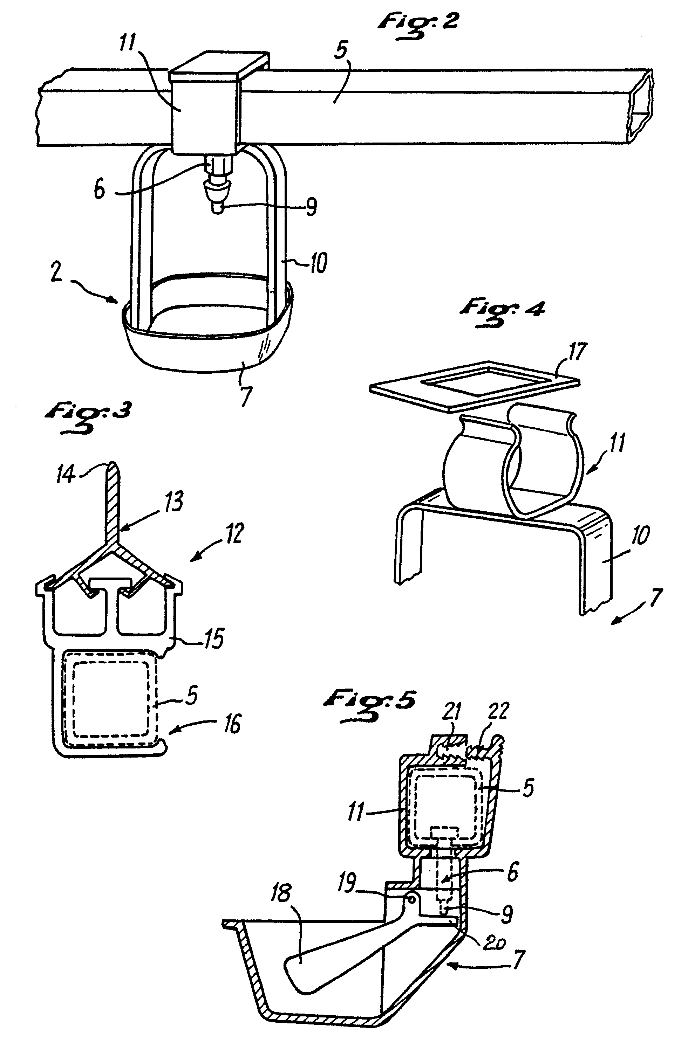

La figure 2 schématise en vue de détail un point d'eau (2) où le bec d'écoulement (6) fixé sur la conduite (5) comporte un téton de manoeuvre (9). Il suffit à l'animal de soulever le téton (9) pour provoquer la délivrance d'eau. Le godet récupérateur (7) est de petite dimension pour ne pas gêner l'accès au bec d'écoulement (6). Le godet (7) est suspendu par une anse (10) qui est elle-même fixée à la conduite (5) par l'intermédiaire d'un collier (11).

Selon l'invention, la rampe d'abreuvement (1) comporte des moyens (12) anti-perchage. Il est souhaitable que les volatiles ne puissent se percher sur la rampe (5) ce qui aurait pour conséquence de provoquer une pollution rapide du contenu des godets (7). Pour limiter le nettoyage général de l'installation, la mise en place de moyens anti-perchage est souhaitable.

Ces moyens anti-perchage se présentent sous la forme d'un profilé (13) tel qu'illustré à la figure 3, formant une arête effilée dans sa partie supérieure pour éviter que les volatiles ne puissent se poser dessus. L'exemple de profilé (13) illustré à la figure 3 peut facilement être réalisé à l'aide d'une barre d'aluminium extrudé. Sa fixation sur la conduite d'alimentation (5) est réalisée au moyen de crochets (15) engagés autour de la conduite (5). Chaque crochet (15) comporte une ouverture (16) qui autorise l'engagement de la conduite d'alimentation (5) dans le crochet. Les crochets (15) sont disposés de telle sorte que l'ouverture (16) soit orientée alternativement de telle sorte qu'après avoir enfilé le profilé (13) dans les différents crochets (15), les moyens anti-perchage soient immobilisés sur la conduite d'alimentation (5).

La figure 4 représente un premier mode de réalisation des moyens de fixation du godet (7) sur la conduite (5). Ces moyens se présentent sous la forme d'un collier (11) destiné à ceinturer la conduite dont la fermeture est assurée au moyen d'un anneau de liaison (17) qui relie les deux extrémités du collier (11). De préférence, le godet (7) et l'anneau de fixation (17) sont réalisés en matière plastique.

Une réalisation plus élaborée du godet (7) est illustrée à la figure 5. Selon cette réalisation, le godet (7) suspendu à la conduite (5) est légèrement décalé par rapport à celle-ci. Le godet (7) enferme le bec d'écoulement (6) qui n'est donc plus accessible directement par le volatile. Le godet (7) comporte néanmoins un bras (18) articulé autour d'un axe (19) et qui est placé au sein du godet (7). Lorsque le bras (18) est manoeuvré, c'est-à-dire lorsqu'il pivote autour de l'axe (19), une languette (20) vient appuyer sur le téton (9) du bec d'écoulement (6) et ceci a pour conséquence de faire dégouliner l'eau dans le godet (7). Par conséquent, il suffit à l'animal par exemple avec le bec d'appuyer sur le bras (18) pour provoquer le remplissage du godet (7). En utilisant un bras (18) qui flotte tout en étant pesant, il est même possible d'obtenir un remplissage à niveau constant automatique du godet (7).

La fixation du godet (7) peut également s'obtenir par clipsage tel qu'illustré à la figure 5 selon lequel le collier (11) comporte à l'une de ses extrémités une fente (21) munie sur ses côtés de dents de retenue, et d'une languette (22) munie également de dents de retenue et destinée à pénétrer dans la fente (21) pour s'y immobiliser.

## Revendications

1. Rampe d'abreuvement pour volatiles, destinée notamment à l'élevage industriel au sol de volailles, qui assure une distribution d'eau à partir d'un réservoir de stockage (3) ou d'une alimentation directe, comprenant :
   - une conduite d'alimentation (5) portant des points d'eau (2) espacés pour être accessibles sur toute leur périphérie,
   - des godets (7) disposés à chaque point d'eau (2),
   - des moyens (12) anti-perchage des volatiles, **caractérisée** par le fait que :
   - lesdits moyens anti-perchage (12) se présentent sous la forme d'un profilé (13) formant une arête effilée (14) à sa partie supérieure,
   - ledit profilé (13) est fixé sur ladite conduite d'alimentation (5) au moyen de crochets (15) présentant une ouverture (16) autorisant l'engagement de ladite conduite dans chaque crochet (15),
   - et lesdits crochets (15) sont disposés sur ladite conduite (5) de telle sorte que leur ouverture soit orientée alternativement afin d'immobiliser ledit profilé anti-perchage (13) sur ladite conduite (5).

2. Rampe d'abreuvement, selon la revendication 1, **caractérisée** par le fait que la conduite (5) est suspendue à un treuil (8) qui permet l'ajustement en hauteur de la rampe (1).

3. Rampe d'abreuvement, selon la revendication 1, **caractérisée** par le fait que lesdits points d'eau (2) se présentent sous la forme de becs d'écoulement (6) automatiques sous lesquels sont prévus lesdits godets (7).

4. Rampe d'abreuvement, selon la revendication 1, **caractérisée** par le fait que les godets (7) sont suspendus à ladite conduite d'alimentation (5) et fixés sur celle-ci au moyen de colliers (11) fermés par un anneau de liaison (17).

5. Rampe d'abreuvement, selon la revendication 1, **caractérisée** par le fait que les godets (7) sont suspendus à ladite conduite d'alimentation (5) et fixés autour de la conduite par un clipsage formé d'une fente (21) munie de dents de retenue et d'une languette (22) également munie de dents de retenue.

6. Rampe d'abreuvement, selon la revendication 3, **caractérisée** par le fait que les godets (7) comportent un bras articulé (18) de manoeuvre des becs d'écoulement (6).

7. Rampe d'abreuvement, selon la revendication 6, **caractérisée** par le fait que le bras articulé de manoeuvre (18) comporte un flotteur.

## Claims

1. Watering line for poultry, intended namely for the industrial rearing on the ground of poultry, which ensures a water dispensing from a storage tank (3) or a direct supply, comprising:
   - a supply duct (5) provided with water spots (2) apart from each other in order to be accessible over their complete periphery,
   - cups (7) arranged at each water spot (2),
   - anti-perching means (12) for poultry, characterized in that:
   - said anti-perching means (12) are designed as a profile (13) forming a sharp edge (14) at its upper portion,
   - said profile (13) is secured onto said supply conduct (5) by means of hooks (15) having an aperture (16) enabling the engagement of said duct into each hook (15),
   - and said hooks (15) are arranged on said duct (5) so that their aperture be alternately oriented in order to immobilize said antiperching profile (13) onto said duct (5).

2. Watering line according to claim 1, characterized in that the duct (5) is hung from a hoist (8) which allows the height adjustment of the line (1).

3. Watering line according to claim 1, characterized in that said water spots (2) are designed as automatic flow nozzles (6) under which said cups (7) are provided for.

4. Watering line according to claim 1, characterized in that the cups (7) are hung from said feeding line (5) and secured to same by means of clips (11) closed by a connection ring (17).

5. Watering line according to claim 1, characterized in that the cups (7) are hung from said feeding line (5) and secured about the duct by a clip-on means comprised of a slot (21) provided with clamping teeth and a tongue (22) also provided with clamping teeth.

6. Watering line according to claim 3, characterized in that the cups (7) comprise a hinged arm (18) for operating the flow nozzles (6).

7. Watering line according to claim 6, characterized in that the hinged operating arm (18) comprises a float.

**Ansprüche**

1. Linientränke für Geflügel, die nämlich für die industrielle Geflügelzucht auf dem Boden bestimmt ist, eine Wasserzufuhr ab einem Auflagerungsbehälter (3) oder einer direkten Zufuhr sichert, umfassend:
   - eine Zufuhrleitung (5) mit Wasserstellen (2), die von einander entfernt sind, um über deren ganzen Umkreis zugänglich zu sein,
   - an jeder Wasserstelle angeordnete Becher (7),
   - Mittel (12) gegen das Hocken des Geflügels, dadurch gekennzeichnet, daß:
   - die genannten Mittel (12) gegen das Hocken als ein Profil (13), das an seinem Oberteil einen scharfen Rand (14) bildet, ausgestaltet sind,
   - das genannte Profil (13) mittels Haken (15), die eine Öffnung (16) aufweisen, die das Einführen der genannten Leitung in jeden Haken (15) erlaubt, an der genannten Leitung (5) befestigt ist,
   - und die genannten Haken (15) so auf der genannten Leitung (5) angeordnet sind, daß deren Öffnung abwechselnd orientiert ist, damit das genannte Profil (13) gegen das Hocken unbeweglich auf der genannten Leitung (5) sitzt.

2. Linientränke nach Anspruch 1, dadurch gekennzeichnet, daß die Leitung (5) an einer Winde (8) aufgehängt ist, wodurch die Höheregelung der Linientränke (1) möglich ist.

3. Linientränke nach Anspruch 1, dadurch gekennzeichnet, daß die genannten Wasserstellen (2) als automatische Auslaufdüsen (6) ausgestaltet sind, unter denen die genannten Becher (7) vorgesehen sind.

4. Linientränke nach Anspruch 1, dadurch gekennzeichnet, daß die Becher (7) an der genannten Zufuhrleitung (5) aufgehängt und mittels Bügel (11), die mittels eines Verbindungsrings (17) geschlossen werden, an dieser letzten befestigt sind.

5. Linientränke nach Anspruch 1, dadurch gekennzeichnet, daß die Becher (7) an der genannten Zufuhrleitung (5) aufgehängt und um die Leitung befestigt sind mittels Hineinandergreifmittel, die aus einem mit Klemmzähnen versehenen Schlitz (21) und einer ebenfalls mit Klemmzähnen versehenen Lasche (22) bestehen.

6. Linientränke nach Anspruch 3, dadurch gekennzeichnet, daß die Becher (7) einen gelenkten Arm (18) zum Betätigen der Auslaufdüsen (6) umfassen.

7. Linientränke nach Anspruch 6, dadurch gekennzeichnet, daß der gelenkte Betätigungsarm (18) einen Schwimmer umfaßt.

Fig.1

Fig. 2

Fig. 3

Fig. 4

Fig. 5